# EUROPEAN PATENT APPLICATION

(11) **EP 2 017 710 A2**
(43) Date of publication of application: **21.01.2009**
(21) Application number: 08158795.8
(22) Date of filing: 23.06.2008
(51) Int. Cl.: G06F 3/048

(54) **Method and apparatus for connecting a cellular telephone user to the internet**

(30) Priority: 24.06.2007 IL 18417807
(71) Applicant: xSights Media Ltd., 42505 Netania (IL)
(72) Inventor: Dariel, Eran, 44935, SDE WARBURG (IL)
(74) Representative: Modiano, Micaela Nadia

(57) **Abstract**

A method and devices are described for providing a user of a mobile communication apparatus with a prediction of a string of characters based on one or more characters. The method includes the steps of: receiving information that relates to the location of the mobile communication apparatus; receiving character information which is part of a string of characters to be predicted; accessing databases which comprise pre-defined strings of characters and selecting therefrom a group of strings of characters associated with the vicinity at which the mobile communication apparatus is currently located; transmitting the selected group of strings of characters to the mobile communication apparatus; and displaying the selected group of strings of characters at the mobile communication apparatus.

## Description

### Field of the Invention

The present invention relates to a method and device for predicting word suffix, and more particularly to a system capable of connecting a user to the Internet by only inputting part of a word associated with a website, and a method for using the system.

### Background of the Invention

The use of mobile telephones is now widespread, with hundreds of millions of mobile telephones being in operation around the world.

The majority of current mobile telephones and especially the newer ones provide the capability to surf the Internet and allow, among others, to retrieve information at will. One example of a way to utilize this capability may be demonstrated when a user reaches a business establishment about which he/she would like to receive some information. In such a case, the user will link through his/her service provider to a search engine, will type in the name of the business establishment and in response will receive entries that contain the name that was typed in.

Needless to say, that typing the name of the business establishment can be a cumbersome task, especially when taking into account the size of the mobile telephone's keys, the fact that there are number of characters associated with each of these keys and the probability of an error to occur.

A number of attempts to overcome the problems associated with typing a word, e.g. when creating a message, have been made. In such a case, the user starts writing the message by entering the characters for the words comprising the message via a cellular telephone keyboard. To facilitate entry of letters and punctuation when composing a text message, the characters of the alphabet are typically divided into subsets and each subset is mapped to a different key of the keyboard. However, there is no one to one mapping between the characters of the alphabet and the keys of the keyboard.

The text editor on the cellular telephone has therefore some mechanism to disambiguate between the different letters associated with the same key. For example, in mobile telephones typically the key corresponding to the digit "9" is also associated with the characters "W", "X", "Y" and "Z". There are two well-known techniques for disambiguating letters typed on such an ambiguous keyboard. By the first, the user presses each key a number of times depending on the letter that he/she wants to enter. For the above example, pressing the key corresponding to the digit "9" once gives the character "W" and pressing the key four times gives the character "Z". Usually there is also a predetermined period of time within which the multiple key strokes must be entered. This allows for the key to be re-used for another letter when necessary.

The other technique is to use the cellular telephone having a predictive text editor. By this method the user enters a word by pressing the keys corresponding to each letter of the word exactly once and the text editor includes a dictionary which defines the words that may correspond to the sequence of key presses. For example, the user wants to enter the word "hello", then he/she does that by pressing the keys "4" ("GHI"), "3" ("DEF"), twice the "5" key ("JKL"), and "6" ("MNO"). The predictive text editor then uses the stored dictionary to disambiguate the sequence of keys pressed by the user into possible words. The dictionary also includes frequency of use statistics associated with each word which allows the predictive text editor to choose the most likely word corresponding to the sequence of keys, even before the user has completed pressing all the keys representing the word's characters. If the predicted word is not what the user had in mind, then he/she can scroll through a menu of possible words to select the correct word.

Thus, having predictive text editors reduce the number of key presses required to enter a given word compared to those that use multiple pressing technique.

The following publications describe some related solutions.

CA 2550669 describes an enhanced text entry system which uses word-level analysis to correct inaccuracies automatically in user keystroke entries on reduced-size or virtual keyboards. A method and system determine alternate textual interpretations of each sequence of inputs detected within a designated auto - correcting region. Each such sequence corresponds to a complete word, and the user can easily select the intended word from among the generated interpretations.

WO 07/027002 relates to a predictive keyword website connecting system to connect a user to a website by only inputting a part of a word representing the website. The system includes a user terminal for running a web browser and transmitting one or more character information inputted by the user to the internet; a database for storing a word(s) related to the character information and a website(s) linked with the word(s). A service server searches the stored word(s) and a link is created to the website(s) linked with the word(s) from the database based on the character information transmitted from the Internet.

JP 2006094535 is concerned with an improved method for predicting keyboard input for a cellular telephone subscriber, by using an improved cellular telephone interface device. By the proposed solution, the interface device compares each of the subscriber's keystrokes with a database dictionary tree of text entries, known to have high probability of being an input. The cellular telephone interface device selects the matching entry of highest probability, if there is any, from the database and displays the entry for the subscriber. The subscriber can choose the entry suggested by the cellular telephone interface device or continue with manual entering of the characters.

Still, a major drawback inherent to the methods described above, is, that in order to carry out such a predictive procedure, it is necessary to have a pre-defined dictionary, i.e. one that includes all the words that can be selected for the prediction. Thus, when typing a message, (e.g. a SMS) a dictionary can indeed be used as an appropriate such database, but, when the word that is being searched for is a name of a business establishment as in the application mentioned above, using a dictionary will be of a very little help, if at all, for the simple reason that a vast number of business names have no dictionary meaning as they are pure imaginary invented words.

### Summary of the Invention

It is an object of the present invention to provide devices and methods to allow prediction of a text string based on partial input of the text string, with the help of information related to the vicinity at which the text is present.

It is another object of the present invention to allow provisioning of information to a user of a portable device about a business establishment at his/her vicinity with minimum efforts from the user side.

It is yet another object of the present invention to provide a system and a method capable of retrieving information from the Internet by only inputting a character or part of a word together with information about the neighborhood at which the subject of the requested information is located.

It is still another object of the present invention to provide a predictive website connecting system by using at least one character information transmitted from a user terminal and information about the geographical vicinity at which the user is currently located.

Other objects of the invention will become apparent as the description of the invention proceeds.

Thus, there is provided in accordance with one aspect of the invention, a method for providing a user of a mobile communication apparatus with a prediction of a string of characters based on one or more characters, wherein the method includes the steps of:
i. receiving information that relates to the location of the mobile communication apparatus;
ii. receiving character information inputted at the mobile communication apparatus, wherein the character information being part of the string of characters to be predicted;
iii. accessing at least one database which comprises pre-defined strings of characters and selecting therefrom a group of strings of characters comprising at least one string of characters associated with the vicinity at which the mobile communication apparatus is currently located, and wherein the at least one string of characters comprises the received character information;
iv. transmitting the selected group of strings of characters to the mobile communication apparatus; and
v. displaying at least one of the selected group of strings of characters at the mobile communication apparatus.

According to a preferred embodiment of the invention, the method provided further comprises the steps of:
vi. at the mobile communication apparatus, selecting one or more strings of characters out of the selected group of strings of characters; and
vii. providing connectivity to at least one website associated with the one or more string of characters selected in accordance with step vi.

In accordance with still another preferred embodiment, step iii includes the steps of:
iii.a checking whether there are in the at least one database any commercial names comprising the inputted character information and which are associated with the vicinity at which the mobile communication apparatus is currently located; and
iii.b if no such commercial name is found in the at least one database, returning to step ii to receive additional character information.

By yet another embodiment of the invention, the one or more databases comprise one or more lists of names of business establishments which include business establishments located at the vicinity at which said portable communication device is currently located.

Preferably, selecting the group of strings of characters in step iii, comprises matching the received character information with an equivalent part of a string of characters appearing in a list of names of business establishments located at the current vicinity of the mobile communication apparatus.

In accordance with another preferred embodiment of the invention, the method provided further comprises the step of connecting the mobile communication apparatus with a website associated with the string of characters selected at step vi.

According to another aspect of the invention, there is provided a portable communication apparatus which comprises: input means for inputting at least one character out of a plurality of characters associated with a commercial name for which data is required; a location means for identifying current location of the portable communication apparatus; data retrieval means for accessing one or more databases and retrieving data based on the at least one inputted character and the current location of the portable communication apparatus; and a display means adapted to present retrieved data that is associated with the commercial name.

In accordance with an embodiment of the invention, the portable communication device further comprising a processor operative to formulate a search query based on the at least one inputted character and on information related to the current location of the portable communication apparatus.

By yet another aspect of the present invention, there is provided a communication device comprising: a receiver for receiving information concerning an input of at least one character from a portable communication apparatus communicating with the communication device, wherein the at least one character is part of a plurality of characters representing a commercial name; means to receive information regarding the current location of the portable communication apparatus; a data retrieval means operative to receive the at least one character inputted and information related to the current location of the portable communication apparatus, and to access one or more databases for retrieving data based on the at least one character inputted and the information related to the current location of portable communication apparatus; and transmission means operative to forward information based on the retrieved data towards the portable communication apparatus.

Preferably, the at least one character to be received from the portable communication apparatus, is a prefix of the name of a commercial establishment.

According to another embodiment, the location means are operative to receive location related data from a global positioning system (GPS) associated with the portable communication apparatus.

Preferably, the portable communication apparatus is a cellular phone, a PDA and the like.

In accordance with still another embodiment of the invention, the location means are operative to receive location related data through a wireless communication network associated with the portable communication apparatus, e.g. a cell location as provided by the operator of the cellular network with which the portable communication device is associated. Location may also be extracted from WiFi hotspots, Cellbase triangulation, etc.

The term "location" as used herein and throughout the specification and claims, should not necessarily be understood as the portable communication apparatus exact geographical location, but as will be appreciated by those skilled in the art, also to encompass the current vicinity of the portable communication device. In addition, the resolution of the location related data may also be dependent upon the source providing that data.

By yet another embodiment, the data retrieved from the one or more databases based on the at least one inputted character and on the location of the portable communication apparatus location, comprises a name of a business establishment. Preferably, the data retrieved, further comprises text that relates to that business establishment.

According to another aspect of the invention there is provided a predictive keyword website connecting system for predicting a name of a website to which a user of a mobile communication device wants to connect by inputting at least one character that will be transmitted from his/her and by providing the system with information regarding the location of the user's device. The system comprising: a user mobile communication device for running a web browser having an address window and transmitting one or more character information inputted by the user; a database for storing a keyword(s) related to the character information and a website(s) linked with the keyword(s); a location means operative to receive information about the current location of the mobile communication device; a service server for searching the stored keyword(s) and the website(s) linked with the keyword(s) from the database based on the character information transmitted, screening them to include only the ones matched with ones that are at the vicinity of the mobile communication device, and transmitting the search results to the user terminal.

According to another preferred embodiment, at least one of the mobile communication device and the service server includes: a module unit containing: a program download module for providing a program showing the keyword(s) on a lower part of the address window; a service supply module for transmitting the keyword(s) searched based on the character information, the location of the mobile communication device and the website(s) linked with the keyword(s) to the web browser; a data collection module for collecting the character information, the keyword(s) selected by the mobile communication device and the website(s) liked with the keyword(s); and a data update module for updating the stored keyword(s) related to the character information and the website(s) linked with the keyword(s) in the database.

By yet another embodiment of the invention, there is provided a mobile communication device for transmitting at least one of the character information inputted by an input unit to the outside and receiving keywords related to the character information, comprising: an input unit for inputting an instruction of a user; a display unit for displaying operating states of the terminal; a communication unit for providing a communication path connected to the outside; a location means to receive information on the device location; and a processing unit for transmitting the character information inputted by the input unit and the location information received by the location means to the outside through the use of the communication unit and receiving keywords related to the character information and websites linked with the keywords from the outside, and, if a keyword is selected by the input unit from among the keywords, connecting to a website linked with the selected keyword through the communication unit.

### Brief description of the Drawings

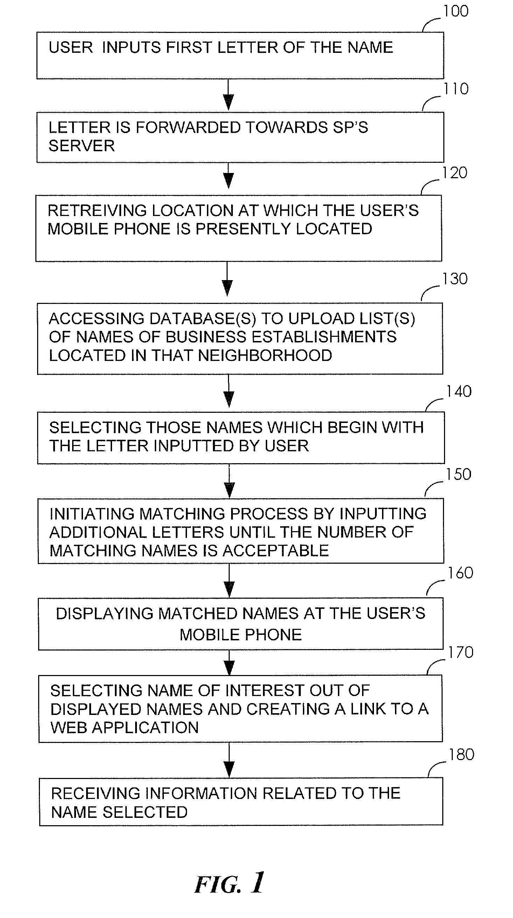

FIG. 1 - presents an example of carrying out the method according to an embodiment of the present invention.

### Detailed Description of the Invention

A better understanding of the present invention is obtained when the following non-limiting detailed description is considered in conjunction with the accompanying figure.

The following is an example of a method carried out in accordance with an embodiment of the present invention, using a cellular phone to input characters, so that the cellular phone is used as a query-input device to a search engine.

Let us assume that a user reaches a business establishment, say a restaurant, of which he has never heard before, and he would like to receive some information about it prior to entering the restaurant (if at all).

The user will then enter the service offered by his cellular operator and input the first letter of the name of the restaurant (100).

The letter is forwarded towards a service provider's server (step 110) and then the vicinity at which the restaurant located, will be established by retrieving the location of the user's portable device (step 120. The location information can be obtained for example by knowing the cell at which the cellular telephone is operative, or preferably, by using the GPS location of the cellular device. Once this location is known, a database such as the web Yellow-pages or Google maps, and the like is accessed, to upload (step 130) a list of business establishments that are located in that neighborhood and their names begin with the letter that was inputted by the user (step 140). Next, the user receives on his cellular phone the list of business establishments and goes over the list to find the restaurant name he is interested in. In the alternative, in order not to provide the user with a too long list, when there is less than a pre-defined number of business establishments (e.g. up to three) that match the two conditions (i.e. the known character(s) and the location) in the list, only then will the list be displayed at the user cellular phone. Still, as the list composed based on the cellular phone location and the first character of the business establishment, is likely to contain more than the pre-defined number of business establishments, a matching process is initiated (step 150) whereby the user starts inputting one or more additional characters (letters), and where every time an additional information relating to a further character is added, the number of names that still satisfy the two conditions, decreases, until the list contains no more than the pre-defined number of entries. Then, the list is displayed on the cellular phone display (step 160). The user selects the appropriate name of the restaurant he is interested in, and a link is established with a web application (step 170). In return the user receives at his cellular phone information (e.g. a review) that relates to the restaurant (step 180).

It is to be understood that the above description only includes some embodiments of the invention and serves for its illustration. Numerous other ways of carrying out the methods provided by the present invention may be devised by a person skilled in the art without departing from the scope of the invention, and are thus encompassed by the present invention.

For example, it should be clear to any person skilled in the art that the functionalities required to carry out the present invention may divided differently between the portable apparatus and the server. To name but few, the retrieval of the portable apparatus location data can take place either by the portable apparatus or by the server, and so on. It should be understood that any such shifting a functionality from the portable apparatus to the server and vice versa, is a matter of simple selection and can be done without departing from the scope of the present invention.

## Claims

1. A method for providing a user of a mobile communication apparatus with a prediction of a string of characters based on one or more characters, wherein the method includes the steps of:
i. receiving information that relates to the location of said mobile communication apparatus;
ii. receiving character information inputted in said mobile communication apparatus, wherein said character information being part a said string of characters to be predicted;
iii. accessing at least one database which comprises pre-defined strings of characters and selecting therefrom a group of strings of characters comprising at least one string of characters, associated with the vicinity at which said mobile communication apparatus is currently located and wherein said at least one string of characters comprises the received character information;
iv. transmitting the selected group of strings of characters to the mobile communication apparatus; and
v. displaying at least one of the selected group of strings of characters at the mobile communication apparatus.

2. A method according to claim 1, further comprising the steps of:
vi. at the mobile communication apparatus, selecting one or more strings of characters out of the selected group of string of characters; and
vii. providing connectivity to at least one website associated with the one or more selected string of characters.

3. A method according to claim 1, wherein step iii includes the steps of:
iii.a checking whether there is at least one commercial name comprising the inputted character information and associated with the vicinity at which said mobile communication apparatus is currently located, in the at least one database; and
iii.b if no such commercial name is found in the at least one database, returning to step ii to receive additional character information.

4. A method according to claim 1, wherein said one or more databases comprise a list of names of business establishments which relate to business establishments located at the vicinity at which said portable communication device is currently located.

5. A method according to claim 4, wherein the step of selecting said group of strings of characters in step iii, comprises matching said received character information with said list of business establishments located at the current vicinity of said portable communication apparatus.

6. A method according to claim 1, further comprising the step of connecting the mobile communication apparatus with a website associated with the string of characters selected at step vi.

7. A portable communication apparatus comprising: input means for inputting at least one character out of a plurality of characters associated with a commercial name for which data should be retrieved; a location means for identifying current location of said portable communication apparatus; data retrieval means for accessing one or more databases and retrieving data therefrom based on the at least one inputted character and on the current location of said portable communication apparatus; and a display means adapted to present retrieved data that is associated with said commercial name.

8. A portable communication device according to claim 7, further comprising a processor operative to formulate a search query based on the at least one inputted character and on information related to the current location of said portable communication apparatus.

9. A communication system comprising: a receiver for receiving information concerning an input of at least one character from a portable communication apparatus communicating with said communication device, wherein the at least one character is a part of a plurality of characters representing a commercial name; means to receive information regarding the current location of the portable communication apparatus; a data retrieval means for accessing one or more databases and retrieving data therefrom based on the inputted at least one character and on information related to the current location of said portable communication apparatus; and transmission means operative to forward information based on said retrieved data towards said portable communication apparatus.

10. A communication system according to claim 9, wherein said at least one character to be received from said portable communication apparatus, is a prefix of a name of a commercial establishment.

11. A communication system according to claim 9, wherein said location means are operative to receive location related data from a global positioning system (GPS) associated with the portable communication apparatus.
